(19) **Europäisches Patentamt / European Patent Office / Office européen des brevets**

(11) **EP 4 345 943 A1**

(12) # EUROPEAN PATENT APPLICATION
published in accordance with Art. 153(4) EPC

(43) Date of publication:
**03.04.2024 Bulletin 2024/14**

(21) Application number: **22831582.6**

(22) Date of filing: **30.05.2022**

(51) International Patent Classification (IPC):
**H01M 4/134** (2010.01)       **H01M 10/052** (2010.01)
**H01M 10/44** (2006.01)

(52) Cooperative Patent Classification (CPC):
**B60L 50/60; H01M 4/134; H01M 4/36; H01M 4/38; H01M 4/40; H01M 4/62; H01M 10/052; H01M 10/058; H01M 10/44;** Y02E 60/10; Y02P 70/50

(86) International application number:
**PCT/CN2022/095952**

(87) International publication number:
**WO 2023/273760 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2021 CN 202110730852**

(71) Applicant: **BYD Company Limited**
**Shenzhen, Guangdong 518118 (CN)**

(72) Inventors:
• **PAN, Yi**
**Shenzhen, Guangdong 518118 (CN)**
• **MA, Yongjun**
**Shenzhen, Guangdong 518118 (CN)**
• **GUO, Zizhu**
**Shenzhen, Guangdong 518118 (CN)**
• **WANG, Liangjun**
**Shenzhen, Guangdong 518118 (CN)**
• **SUN, Huajun**
**Shenzhen, Guangdong 518118 (CN)**

(74) Representative: **DehnsGermany Partnerschaft von Patentanwälten**
**Theresienstraße 6-8**
**80333 München (DE)**

(54) **LITHIUM BATTERY AND PREPARATION METHOD THEREFOR, CHARGING METHOD, AND POWER VEHICLE**

(57) The present disclosure a lithium battery and a preparation method thereof, a charging method and a powered vehicle. The lithium battery includes a positive electrode plate, a negative electrode plate, a separator located between the positive electrode plate and the negative electrode plate, and an electrolyte solution. The negative electrode material layer of the negative electrode plate includes a lithium-silicon composite negative electrode active material. The negative electrode material layer has a protective layer on the surface or the lithium-silicon composite negative electrode active material has a protective layer on the surface. The protective layer includes a polymer matrix and a lithium salt. When the lithium battery is fully charged, the lithium-silicon composite negative electrode active material includes elemental lithium and a lithium-silicon alloy $Li_{4.4}Si$, and the elemental lithium accounts for 15%-95% by mole of the lithium-silicon composite negative electrode active material.

FIG. 1

**Description**

## CROSS-REFERENCE TO RELATED APPLICATIONS

The present disclosure claims priority of Chinese Patent Application No. 202110730852.6 filed with China National Intellectual Property Administration on June 29, 2021 and entitled "Lithium battery and preparation method therefor, charging method, and powered vehicle", which is incorporated herein by reference in its entirety.

## FIELD

The present disclosure relates to the technical field of lithium batteries, and specifically to a lithium battery and a preparation method therefor, a charging method, and a powered vehicle.

## BACKGROUND

Lithium batteries have found wide use in portable electronic products such as cell phones and notebook computers and new energy vehicles. At present, graphite is generally used as a negative electrode active material in commercial lithium batteries. To ensure efficient deintercalation and intercalation of lithium ions from and into the positive and negative electrodes during the cycle process of the battery, the effective capacity of the graphite negative electrode is generally greater than that of the positive electrode (i.e., the N/P ratio of the battery is generally greater than 1), to prevent the precipitation of lithium dendrites on the surface of the negative electrode, which affect the cycle performance. However, this gives rise to a higher volume and weight ratio of the negative electrode active material in the battery, limiting the improvement of the energy density of the lithium ion battery. The energy density of the lithium ion battery is hard to exceed 350 mAh/g, failing to meet the growing needs for range and standby time.

Metal lithium has a higher theoretical specific capacity (3861mAh/g) and the most negative electrochemical potential (-3.04 V, relative to the standard hydrogen electrode), and is considered to be the most preferred choice of the negative electrode material for the next generation of high energy-density batteries. At present, metal lithium having a volume ratio that is much lower than that of the traditional negative electrode and even a lithium-free negative electrode (for example, CN201911075192.1) are used by some agencies. Although a lithium battery with a high energy density can be obtained in this way, the cycle performance of the obtained battery is poor, hindering the commercialization of the high-energy-density lithium batteries.

## SUMMARY

In view of this, the present disclosure provides a lithium battery and a preparation method thereof, a charging method and a powered vehicle, to solve the problem of poor cycle performance of metal lithium batteries.

Particularly, in a first aspect, the present disclosure provides a lithium battery, which includes a positive electrode plate, a negative electrode plate, a separator located between the positive electrode plate and the negative electrode plate, and an electrolyte solution. The negative electrode material layer of the negative electrode plate includes a lithium-silicon composite negative electrode active material, and the negative electrode material layer has a protective layer on the surface or the lithium-silicon composite negative electrode active material has a protective layer on the surface. The protective layer includes a polymer matrix and a lithium salt. When the lithium battery is fully charged, the lithium-silicon composite negative electrode active material includes elemental lithium and a lithium-silicon alloy $Li_{4.4}Si$, and the elemental lithium accounts for 15%-95% by mole of the lithium-silicon composite negative electrode active material.

Due to the presence of the lithium-silicon composite negative electrode active material in the lithium battery provided in the first aspect of the present disclosure, the lithium battery has a high energy density, a long cycle life, and a high safety performance.

In a second aspect, the present disclosure further provides a method for preparing a lithium battery. The method includes the following steps:

coating a mixed slurry including a silicon-based material, a conductive agent and a binder onto a negative electrode current collector, drying, and rolling, to form a silicon-based material layer on the negative electrode current collector;
hot pressing a lithium film to the silicon-based material layer in a glove box, to allow the lithium element in the lithium film to be completely transferred to the silicon-based material layer, and react with the silicon-based material in situ to form a negative electrode material layer including a lithium-silicon composite negative electrode active material, so as to obtain a negative electrode plate,
where before the silicon-based material layer and the lithium film are hot pressed, a protective layer is formed on the surface of the silicon-based material layer; or after the negative electrode material layer is formed, a protective layer is formed on the surface of the negative electrode material layer, in which the protective layer includes a polymer matrix and a lithium salt; and

assembling the negative electrode plate into a lithium battery, where when the lithium battery is fully charged, the lithium-silicon composite negative electrode active material includes elemental lithium and a lithium-silicon alloy $Li_{4.4}Si$, and the elemental lithium accounts for 15%-95% by mole of the lithium-silicon composite negative electrode active material.

The preparation method according to the second aspect of the present disclosure has simple process, and is easy to control and suitable for use in large-scale production in industry.

In a third aspect, the present disclosure further provides a charging method for a lithium battery as described above. The method includes the following steps:

when the lithium battery is required to show a long cycle life performance, controlling the charging cut-off voltage $V_s$ of the lithium battery when charged to meet the formula:

$V_s = cV_b + a \times c \times K + b \times c \times (dQ/dV)/(3.6 \times CA)$, where while the lithium battery shows a long cycle life performance, no elemental lithium is precipitated on the negative electrode of the lithium battery at $V_s$, and $V_s < V_h$; and

where in the formula, $V_h$ is an upper charging voltage limit that the lithium battery can tolerate, CA is the nominal capacity of the lithium battery when discharged at 0.33C, $V_b$ is a reference voltage at which no elemental lithium is precipitated on the negative electrode of the lithium battery with a real-time charging capacity, K is the internal resistance growth rate of the real-time DC internal resistance of the lithium battery during the charging process relative to its factory default DC internal resistance, dQ/dV is the real-time differential value of the charged amount of electricity to the charging voltage of the lithium battery, c is the calibration factor of the real-time temperature of a battery core of the lithium battery during the charging process, a is the calibration factor of K, and b is the calibration factor of (dQ/dV)/CA.

The charging method provided in the third aspect of the present disclosure can ensure that the lithium battery has a range as long as possible while having a long battery life.

In a fourth aspect, the present disclosure further provides a powered vehicle, having a battery system including at least one first battery unit. The first battery unit includes a plurality of lithium batteries according to the first aspect of the present disclosure and a first charge control device.

For the powered vehicle bearing the first battery unit, the charging cut-off voltage of the lithium batteries in the first battery unit when charged can be regulated as desired by the practical range.

## BRIEF DESCRIPTION OF THE DRAWINGS

FIG. 1 is a schematic structural view of a lithium battery provided in an embodiment of the present disclosure.
FIG. 2 shows a discharging curve of a lithium battery provided in an embodiment of the present disclosure.
FIG. 3 is a schematic structural view of a powered vehicle provided in an embodiment of the present disclosure.
FIG. 4 is another schematic structural view of a powered vehicle provided in an embodiment of the present disclosure.

## DETAILED DESCRIPTION

The foregoing descriptions are some implementations of the present disclosure. It should be noted that several modifications and variations can be made by those of ordinary skill in the art, without departing from the principle of the present disclosure, which shall fall within the protection scope of the present disclosure.

The technical solution according to the embodiments of the present disclosure will described in detail in below, in combination with accompanying drawings in the embodiments of the present disclosure.

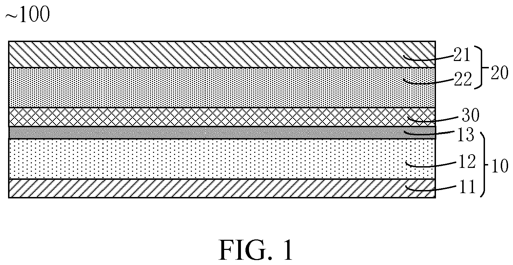

An embodiment of present disclosure provides a lithium battery, having a negative electrode plate including a lithium-silicon composite negative electrode active material. In some embodiments of the present disclosure, referring to FIG. 1, a lithium battery 100 includes a negative electrode plate 10, a positive electrode plate 20, a separator 30 located between the positive electrode plate 20 and the negative electrode plate 10, and an electrolyte solution (not shown). Generally, the negative electrode plate 10 includes a negative electrode current collector 11 and a negative electrode material layer 12 provided on the negative electrode current collector 11. The negative electrode material layer 12 includes a lithium-silicon composite negative electrode active material, and optionally a conductive agent and a binder. Similarly, the positive electrode plate 20 includes a positive electrode current collector 21 and a positive electrode material layer 22 provided on the positive electrode current collector 21. The positive electrode material layer 22 includes a positive electrode active material, and optionally a conductive agent and a binder.

The negative electrode material layer 12 also has a protective layer13 (as shown in FIG. 1) on the surface, or the lithium-silicon composite negative electrode active material has a protective layer on the surface. The protective layer includes a polymer matrix and a lithium salt. The protective layer can guide the lithium ion flow, control the uniform deposition of lithium ions on the surface of the negative electrode plate, effectively inhibit the growth of lithium dendrites on the surface of the negative electrode plate 10 to avoid the internal short circuit of the battery caused by the lithium dendrites piercing the through the separator, reduce the occurrence of side reactions between the negative electrode and the electrolyte solution, relieve the volume expansion of the negative electrode during the cycling process, and improve the cycle and safety performances.

The protective layer can well suppress the cycle attenuation and internal short circuit of the battery caused by lithium plating on the negative electrode. The protective layer is almost insoluble in the electrolyte solution of the battery. Particularly, the polymer matrix may include, without limitation, one or more of polyethylene oxide (PEO), polysiloxane, polyvinylidene fluoride, polymethyl methacrylate, polyacrylonitrile, and a derivative and copolymer thereof. The lithium salt has ionic conductivity, and may include one or more of lithium nitrate ($LiNO_3$), lithium sulfide ($Li_2S$), lithium chloride (LiCl), lithium bromide (LiBr), lithium iodide (LiI), lithium fluoride (LiF), lithium phosphate ($Li_3PO_4$), and so on. In some embodiments, the protective layer may also include an inorganic filler, to increase the lithium ion transmission channel, and improve mechanical properties, etc. The inorganic filler may be at least one of an oxide (such as silica, alumina, titania, and so on), an hydroxide (such as aluminum hydroxide, and magnesium hydroxide), and a salt.

In the present disclosure, the lithium-silicon composite negative electrode active material includes the elements lithium and silicon. When the lithium battery 100 is fully charged, the lithium-silicon composite negative electrode active material includes elemental lithium and a lithium-silicon alloy $Li_{4.4}Si$, and the elemental lithium accounts for 15%-95% by mole of the lithium-silicon composite negative electrode active material.

"Fully charged" means that the positive electrode of the battery is charged to 100% State of Charge (SOC). In this case, the positive electrode capacity of the battery is fully exerted, the battery has a high energy density, and "lithium plated" occurs at the negative electrode. This part of "lithium plated" is active lithium, which contributes to the capacity at the negative electrode. Since when the battery is fully charged, the negative electrode of the battery according to the present disclosure not only allows the active lithium ions deintercalated from the positive electrode to be stored in the negative electrode in the form of an alloy material, and but also accepts direct deposition of elemental lithium on the negative electrode. Therefore, in the negative electrode material layer prepared in the present disclosure, the amount of the lithium-silicon alloy material $Li_xSi$ (0<x<4.4) is small, thus significantly improving the energy density of the battery. Moreover, this, in combination with the arrangement of the protective layer, can inhibit the side reaction of "lithium plated" on the negative electrode of the battery with the electrolyte solution at a high energy density, and reduce the risk of lithium dendrites penetrating the separator. Therefore, the lithium battery according to the embodiment of the present disclosure has high energy density, and also good cycle performance and safety performance, etc.

In the embodiment of the present disclosure, when the lithium battery 100 is not fully charged, for example, the SOC value to which the positive electrode of the battery is charged is lower than a first threshold, the lithium-silicon composite negative electrode active material includes no elemental lithium. In this case, the lithium-silicon alloy in the lithium-silicon composite negative electrode active material can be expressed by a general chemical formula $Li_xSi$, in which 0<x≤4.4. The "first threshold" is a critical value of SOC to which the positive electrode is charged and at which lithium metal is just precipitated on the negative electrode when the battery is charged, that is, an SOC value at which the lithium-silicon alloy in the negative electrode of the battery is fully intercalated with lithium ions (that is, the lithium-silicon alloy is specifically $Li_{4.4}Si$, and at this time, the negative electrode of the battery is charged to 100% SOC) and the lithium ions in the positive electrode are not completely deintercalated.

When the SOC to which the positive electrode of the battery is charged is lower than the first threshold, no lithium plating occurs to the battery, the energy density of the lithium battery is not fully utilized, only the capacity contributed by the lithium-silicon alloy $Li_xSi$ is utilized in the negative electrode, the volume expansion suffered by the negative electrode is also relatively weak, and the side reaction with the electrolyte solution is weak. As such, the lithium battery can undergo multiple rounds of charging and discharging cycles at a lower energy density (which is still much higher than the energy density of batteries using graphite as a negative electrode at present), and have a long cycle life. Therefore, the lithium battery provided in the present disclosure can have both "long cycle life" and "high energy density, and the two characteristics can be freely selected in combination with the battery management system of the lithium battery, to meet the life cycle requirement of the powered vehicle.

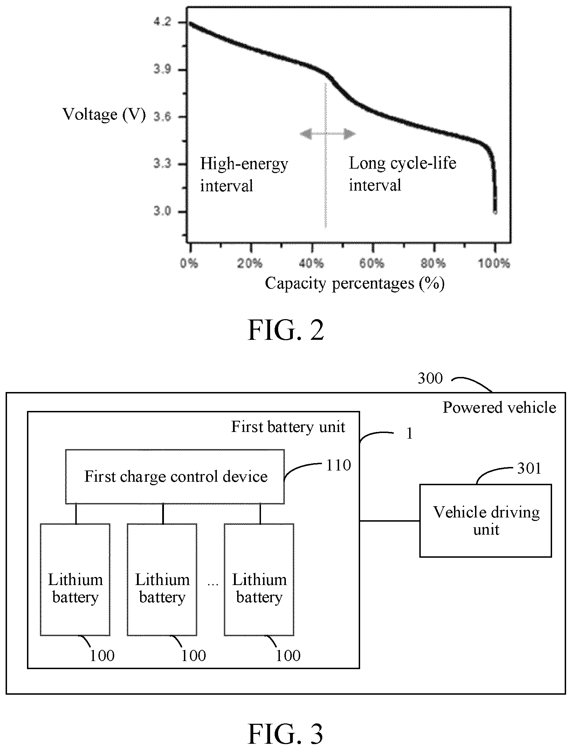

In the present disclosure, when the positive electrode of the lithium battery is in 100% SOC, the lithium-silicon composite negative electrode active material has elemental lithium of adjustable percentages, in the range of 15%-95% by mole. Correspondingly, according to the percentages by mole of elemental lithium, the first threshold can be adjusted accordingly. Optionally, the first threshold is in the range of 15%-95%. FIG. 2 shows a discharging curve of a lithium battery. In FIG. 2, the lithium battery with a lithium-silicon composite negative electrode active material has a discharging inflection point when the discharging capacity is 58 mAh. The discharging inflection point refers to a minimum value of dV/dQ in the discharging curve of the battery. Before this inflection point, the energy density of the battery, (i.e., a product of the battery voltage and the amount of electricity of the battery) is high, and the capacity contributed by both the lithium-silicon alloy $Li_{4.4}Si$ and elemental lithium is utilized. After this inflection point, SOC of the battery is low, only the capacity contributed by the lithium-silicon alloy $Li_xSi$ is utilized at the negative electrode, the energy density of the battery becomes low, but the cycle life of the battery is longer.

Optionally, when the lithium battery 100 is fully charged, the lithium-silicon alloy $Li_{4.4}Si$ accounts for 5%-85% by mole of the lithium-silicon composite negative electrode active material. In some embodiments, when the lithium battery is fully charged, the lithium-silicon alloy $Li_{4.4}Si$ and elemental lithium account for 100% by mole of the lithium-silicon composite negative electrode active material in total. In other words, when the lithium battery is fully charged, the lithium-silicon composite negative electrode active material is formed of elemental lithium and the lithium-silicon alloy $Li_{4.4}Si$. In this case, the lithium-silicon composite negative electrode active material includes exclusively the elements lithium and silicon (that is, it is formed by pressing elemental silicon and metal lithium in situ).

Generally, the N/P ratio of a traditional lithium battery (using graphite or silicon as the negative electrode) is generally greater than 1, to prevent the precipitation of lithium dendrites when the N/P ratio is less than 1, which deteriorate the cycle performance. When the N/P ratio is greater than 1, the percentage by volume of the negative electrode active material is large in the entire battery, and generally 37% or higher. For example, when graphite is used as the negative electrode, the percentage by volume of graphite in the entire battery is 44%-48%. When the negative electrode active material is silicon, the percentage by volume of silicon in the battery is 37%-44%. In the lithium battery of the present disclosure, the aforementioned lithium-silicon composite negative electrode active material including elemental lithium and $Li_{4.4}Si$ is used, the N/P ratio of the lithium battery is less than 1. As such, the percentage by volume (less than 37%, for example, 20% or less) and the percentage by weight of the negative electrode active material in the lithium battery are small, so as to significantly improve the energy density and increase the range of the battery. Due to the presence of the protective layer, when "lithium plating" occurs on the negative electrode, the side reaction of elemental lithium with the electrolyte solution and its disordered growth to pierce the separator are suppressed, which in turn leads to a better cycle performance of the battery.

Notably, the N/P ratio of the lithium battery 100 in the present disclosure being less than 1 specifically means that the ratio of the capacity of the lithium-silicon composite negative electrode active material to the capacity of the positive electrode active material is less than 1. The capacity of the lithium-silicon composite negative electrode active material corresponding to the N/P ratio refers to the negative electrode capacity when the negative electrode is just right intercalated with lithium to form the lithium-silicon alloy $Li_{4.4}Si$ without precipitation of elemental lithium (at this time, the lithium ions in the positive electrode have not been completely deintercalated), that is, the negative electrode capacity corresponding to the first threshold.

Optionally, in the lithium battery 100, the volume ratio of the lithium-silicon composite negative electrode active material to the positive electrode active material is 0.1375-0.825. The ratio of the thickness of the positive electrode plate 20 to the thickness of the negative electrode plate 10 is 8:1-4:3. In this way, the N/P ratio of the lithium battery is well ensured to be less than 1, thus improving the energy density of the battery.

The electrolyte solution of the lithium battery 100 generally includes a solvent and a second lithium salt. In an embodiment of the present disclosure, the solvent in the electrolyte solution of the lithium battery 100 is a non-carbonate solvent. Specifically, the solvent in the electrolyte solution comprises an ether solvent, specifically, at least one of an non-halogenated ether solvent and a fluoroether solvent. The side reaction between the carbonate solvent and metal lithium negative electrode is fast, and tends to generate sharp lithium dendrites on the negative electrode of the battery to pierce the battery separator, causing the spontaneous combustion of the battery. The ether solvent has good compatibility with metal lithium, and the side reaction between the ether solvent and metal lithium is much less than the side reaction between the carbonate solvent and lithium metal, thus effectively suppressing the consumption of active lithium during the cycle process, improving the uniformity and compactness of lithium ion deposition, and avoiding the formation of sharp lithium dendrites to pierce the battery separator and cause safety risks.

Optionally, the non-halogenated ether solvent is one or more selected from, but not limited to, ethylene glycol dimethyl ether, ethylene glycol diethyl ether, ethylene glycol dipropyl ether, ethylene glycol dibutyl ether, diethylene glycol dimethyl ether, triethylene glycol dimethyl ether, tetraethylene glycol dimethyl ether, dipropylene glycol dimethyl ether, tripropylene glycol monomethyl ether, diethylene glycol dimethyl ether, diethylene glycol diethyl ether, diethylene glycol dibutyl ether, triethylene glycol dimethyl ether, tetraethylene glycol dimethyl ether, and so on, Optionally, the fluoroether solvent is one or more selected from, but not limited to, 1,1,2,2-tetrafluoroethyl ethyl ether, 1,1,2,2-tetrafluoroethyl-2,2,3,3-tetrafluoropropyl ether, hexafluoroisopropyl ethyl ether, tetrafluoroethyl-tetrafluoropropyl ether, 2,2,2-trifluoroethyl ether, 1,1,2,2-tetrafluoroethyl-2,2,2-trifluoroethyl ether, difluoromethyl-2,2,3,3-tetrafluoropropyl ether, 2,2,3,3,3-pentafluoropropyl methyl ether, 1,1,2,3,3,3-hexafluoropropyl ethyl ether, 1,1,2,3,3,3-pentafluoropropyl difluoromethyl ether, 1,1,2,2-tetrafluoroethyl-2,2,3,3-tetrafluoropropyl ether, 1H,1H,5H-octafluoropentyl-1,1,2,2-tetrafluoroethyl ether and bis(2,2,2-trifluoroethyl) ether.

The second lithium salt in the electrolyte solution is one or more selected from, but not limited to, lithium bis(fluorosulfonyl)imide $(LiN(SO_2F)_2)$, lithium bis(trifluoromethylsulfonyl)imide $(Li(CF_3SO_2)_2N)$, lithium bis(perfluoroethylsulfonyl)imide $(Li(C_2F_5SO_2)_2N)$, lithium bis(oxalato)borate $(LiB(C_2O_4)_2$, LiBOB), lithium trifluoromethylsulfonate $(LiCF_3SO_3)$, lithium perfluorobutylsulfonate $(LiC_4F_9SO_3)$, and tris(trifluoromethylsulfonyl)methyl lithium $(LiC(CF_3SO_2)_3)$.

Optionally, the lithium-silicon composite negative electrode active material is formed by pressing a silicon-based material and metal lithium in situ). The silicon-based material may include, but is not limited to, elemental silicon, a silicon oxide, a silicon-based non-lithium alloy (such as, silicon-germanium alloy, silicon-magnesium alloy, silicon-copper alloy, and ferrosilicon alloy, etc.) or other silicon compounds.

In some embodiments, the negative electrode material layer 12 including the lithium-silicon composite negative electrode active material is formed by hot pressing a lithium film (such as a lithium foil or a lithium film attached to a release film) and an initial negative electrode material layer including the silicon-based material in situ. In this case, the lithium element in the lithium film can be completely transferred into the initial negative electrode material layer, and reacted with the silicon-based material in situ to form the lithium-silicon composite negative electrode active material. In some other embodiments, the lithium-silicon composite negative electrode active material is formed by pressing a mixture of a lithium metal powder and the silicon-based material (in the form of a wet slurry or dry powder) in situ. In this case, the negative electrode material layer 12 can be formed by coating a mixed slurry of the silicon-based material and lithium powder on a negative electrode current collector, drying, pressing, and reacting on the negative electrode current collector in situ to form a negative electrode material layer including the lithium-silicon composite negative electrode active material. Alternatively, the lithium-silicon composite negative electrode active material formed by pressing a mixture of a lithium metal powder and the silicon-based material in situ is coated, dried, and pressed to form a negative electrode plate.

When a negative electrode material layer 12 with a protective layer on the surface needs to be formed, a lithium film attached to a release film can be hot pressed to a silicon-based material layer with a protective layer on the surface (where the silicon-based material layer is the initial negative electrode material layer, including the silicon-based material and optionally a binder, and a conductive agent) in situ. In other embodiments of the present disclosure, the negative electrode material layer with a protective layer on its surface can also be formed by forming a protective layer on the surface after the negative electrode material layer including the lithium-silicon composite negative electrode active material is formed.

In the present disclosure, the negative electrode current collector 11, and the positive electrode current collector 21 are independently selected from an elemental metal foil or an alloy foil. Exemplarily, the negative electrode current collector 11 can be specifically a copper foil, and the positive electrode current collector 21 can be specifically an aluminum foil. The positive electrode active material can be at least one of lithium iron phosphate, lithium manganese phosphate, lithium manganese iron phosphate, lithium vanadium phosphate, lithium cobalt phosphate, lithium cobaltate, lithium manganese oxide, lithium nickel manganese oxide, lithium nickel cobalt manganese oxide (NCM), and lithium nickel cobalt aluminate (NCA). The binder and the conductive agent in the negative electrode plate 10 and the positive electrode plate 20 can be conventional materials in the art. For example, the conductive agent can be one or more of conductive carbon black (such as acetylene black, ketjen black), carbon nanotubes, carbon fibers, graphite and furnace black. The binder can be independently one or more of styrene-butadiene rubber (SBR), polyvinylidene fluoride (PVDF), polytetrafluoroethylene (PTFE), polyvinyl alcohol (PVA), polyacrylonitrile (PAN), polyimide (PI), polyacrylic acid (PAA), polyolefins (such as polyethylene and polypropylene), sodium carboxymethylcellulose (CMC) and sodium alginate, etc.

In the lithium battery provided in the embodiment of the present disclosure, due to the presence of the lithium-silicon composite negative electrode active material and the protective layer, the percentage of the lithium-silicon composite negative electrode active material in the lithium battery is low, which facilitates the improvement of the energy density of the battery. Moreover, the battery suffers no lithium plating on the negative electrode in a low SOC state, and shows a long cycle life. In a high SOC state, the battery has a quite high energy density, and the side effect of lithium plating is relieved due to the arrangement of the protective layer. Therefore, the lithium battery according to the embodiment of present disclosure has high energy density, long cycle life, and high safety performance.

In a second aspect, an embodiment of the present disclosure provides a method for preparing a lithium battery as described above. The method includes the following steps:

coating a mixed slurry including a silicon-based material, a conductive agent and a binder onto a negative electrode current collector, drying, and rolling, to form a silicon-based material layer on the negative electrode current collector; hot pressing a lithium film to the silicon-based material layer in a glove box, to allow the lithium element in the lithium film to be completely transferred to the silicon-based material layer, and react with the silicon-based material in situ to form a negative electrode material layer including a lithium-silicon composite negative electrode active material, so as to obtain a negative electrode plate,

where before the silicon-based material layer and the lithium film are hot pressed, a protective layer is formed on the surface of the silicon-based material layer; or after the negative electrode material layer is formed, a protective layer is formed on the surface of the negative electrode material layer, in which the protective layer includes a polymer matrix and a lithium salt; and

assembling the negative electrode plate into a lithium battery. When the lithium battery is fully charged, the lithium-silicon composite negative electrode active material includes elemental lithium and a lithium-silicon alloy $Li_{4.4}Si$, and the elemental lithium accounts for 15%-95% by mole of the lithium-silicon composite negative electrode active material.

The silicon-based material may include, but is not limited to, elemental silicon, a silicon oxide, a silicon-based non-lithium alloy (such as, silicon-germanium alloy, silicon-magnesium alloy, silicon-copper alloy, and ferrosilicon alloy, etc.) or other silicon compounds (for example, fluorinated silicon oxide, lithium hexafluorosilicate, silicon carbide, and silicon boride). When the silicon-based material used includes other elements than silicon (such as oxygen, and fluorine), the lithium-silicon composite negative electrode active material also includes these elements accordingly. Exemplarily, when the silicon-based material is elemental silicon, and the SOC value of the battery is lower than the first threshold, the lithium-silicon composite negative electrode active material includes exclusively lithium-silicon alloy $Li_xSi$. When the lithium battery is fully charged, the lithium-silicon composite negative electrode active material is formed of elemental lithium and $Li_{4.4}Si$. Exemplarily, when the silicon-based material is a silicon oxide, and the SOC value of the battery is lower than the first threshold, the lithium-silicon composite negative electrode active material includes the lithium-silicon alloy $Li_xSi$, $Li_2O$, and $Li_2SiO_3$. When the lithium battery is fully charged, the lithium-silicon composite negative electrode active material includes $Li_{4.4}Si$, elemental lithium, $Li_2O$, and $Li_2SiO_3$.

In an embodiment of the present disclosure, when the silicon-based material layer with a protective layer on its surface is hot-pressed with a lithium film in situ, the protective layer and the silicon-based material layer shows a porous structure under hot press, such that the lithium element in the lithium film enters the silicon-based material layer, and reacts with the silicon-based material in situ to form the lithium-silicon composite negative electrode active material, and finally form the negative electrode material layer having a protective layer. The negative electrode material layer includes the lithium-silicon composite negative electrode active material.

The lithium film subjected to hot pressing treatment with the silicon-based material layer can be directly a lithium foil, or a lithium film attached to a release film, and preferably a lithium film attached to a release film, to avoid the loss of lithium caused by direct contact between lithium film and pressing equipment.

The protective layer can be formed on the negative electrode material layer by liquid coating, vapor deposition or electrodeposition.

"Assembling the negative electrode plate into a lithium battery" specifically includes: sequentially stacking the positive electrode plate, the separator and the negative electrode plate, and preparing into a bare battery core; and placing the bare battery core in a battery housing, injecting an electrolyte solution, and sealing the battery housing, to obtain a lithium battery.

The method for preparing a lithium battery provided in the embodiment of the present disclosure has simple process, is easy to control and suitable for large-scale industrial preparation of lithium batteries with high energy density and long cycle life.

In a third aspect, an embodiment of the present disclosure provides a charging method for the lithium battery. The method includes the following steps:

when the lithium battery is required to show a long cycle life performance, controlling the charging cut-off voltage $V_s$ of the lithium battery when charged to meet the formula:

$V_s = cV_b + a \times c \times K + b \times c \times (dQ/dV)/(3.6 \times CA)$. While the lithium battery shows a long cycle life performance, no elemental lithium is precipitated on the negative electrode of the lithium battery right at $V_s$, and $V_s < V_h$.

In the above formulas, $V_h$ is an upper charging voltage limit that the lithium battery can tolerate, CA is the nominal capacity of the lithium battery when discharged at 0.33C, $V_b$ is a reference voltage at which no elemental lithium is precipitated on the negative electrode of the lithium battery with a real-time charging capacity, K is the internal resistance growth rate of the real-time DC internal resistance of the lithium battery during the charging process relative to its factory default DC internal resistance, dQ/dV is the real-time differential value of the charged amount of electricity to the charging voltage of the lithium battery, c is the calibration factor of the real-time temperature of a battery core of the lithium battery during the charging process, a is the calibration factor of K, and b is the calibration factor of (dQ/dV)/CA.

It should be noted that $V_s$ is the battery voltage to which the negative electrode of the lithium battery is charged and at which elemental lithium is just precipitated (that is, the positive electrode of the battery is charged to the first threshold). $V_h$ is the battery voltage at which the lithium battery is fully charged (that is, the positive electrode is charged to 100% SOC), namely, the cut-off voltage corresponding to the maximum capacity that the positive electrode can provided, or rated voltage. Apparently, the capacity $C_s$ of the lithium battery at the voltage $V_s$ is lower than the capacity $C_h$ of the lithium battery at the voltage $V_h$.

When the lithium battery is required to show a long cycle life performance, at the charging cut-off voltage $V_s$, no elemental lithium is precipitated at the negative electrode of the lithium battery. At this time, the lithium battery is not fully charged, and is only charged to a lower SOC, the volume expansion suffered by the negative electrode is also relatively weak, and the side reaction with the electrolyte solution is weak. Therefore, the lithium battery can undergo multiple rounds of charging and discharging cycles, and have a long cycle life. When the lithium battery is required to show a high energy density characteristic, the charging cut-off voltage of the lithium battery is $V_h$. At the voltage $V_h$, the negative electrode generally includes the lithium-silicon alloy and an amount of elemental lithium.

Therefore, with increasing number of charging of the lithium battery at the charging cut-off voltage $V_h$ (that is, fully charged), active elemental lithium is continuously consumed. When the lithium battery is charged at the charging cut-off voltage $V_s$ again, the $V_s$ to which the negative electrode of the battery is charged and at which elemental lithium is just precipitated is adjusted upwards according to the formula above, to reduce the difference between $V_s$ and $V_h$, and ensure that the energy density of the battery when $V_s$ is used as the charging cut-off voltage of the battery while the long cycle life of the battery is not compromised. Therefore, the powered vehicle using the lithium battery can have a long range. For example, if the charging cut-off voltage when the lithium battery is charged for an i-th time is $V_h$ and the lithium battery is required to show a long cycle life performance, the charging cut-off voltage $V_s$ when the lithium battery is charged for an (i+1)th time is increased according to the above formula. Moreover, if the lithium battery has not been charged at the charging cut-off voltage $V_h$, when the lithium battery is required to show a long cycle life performance, the $V_s$ is maintained unchanged.

For assembled batteries, the CA and $V_h$ are fixed values. The parameters $V_b$, dQ/dV, K, a, b, and c can be acquired by a charging control device of the lithium battery, for example, the battery management system (BMS). BMS can monitor the status information of the battery, for example, the charging current, the real-time charging voltage, the temperature, and the internal resistance of the battery. These pieces of information can be specifically obtained by an acquisition module of BMS, and stored in a controller of BMS. dQ/dV represents the amount of electricity charged per unit voltage, which can be calculated from current charging capacity point data (charging current and charging voltage) and previous charging capacity point data acquired by BMS of the battery in the same charging process.

$V_b$ is a reference voltage at which no elemental lithium is precipitated on the negative electrode of lithium battery with a real-time charging capacity. $V_b$ can be obtained by calibration according to the capacity of the lithium-silicon composite negative electrode active material without precipitation of elemental lithium. Still further, a battery having a positive electrode of the highest design capacity in combination with a silicon-based negative electrode with a capacity of 10% excess (that is, the lithium battery with NIP = 1. 1) is charged, to obtain a curve of the charging capacity vs the real-time battery voltage during the charging process. The real-time battery voltage at any charging capacity (i.e., the voltage reference) that is, $V_b$, can be obtained from this curve. $V_b$ at various charging capacity can be stored in BMS in advance.

The parameters a, b, and c are non-dimensional empiric values. Optionally, a is in the range of 0.02-1.2, b is in the range of -0.008 to -0.15, and c is in the range of 0.8-1.5. The parameters a, b, and c are calibration factors for the battery corresponding to the current state information, which can be obtained from the established corresponding relation between the battery state information and the corresponding calibration factors. It is to be noted that in the above formula, a, b, c, and K are obtained for the same time point/period during the same charging process of the lithium battery.

For example, the lithium battery generally has a certain operating temperature range, for example, between 10°C and 40°C. If the temperature of the lithium battery is higher, for example, it is higher than the threshold temperature (such as 42°C), for example 45°C, then the value of c is 0.92, to make the adjusted charging cut-off voltage $V_s$ more preferred. In this way, the occurrence of lithium plating is restricted, and the capacity before lithium plating can be utilized fully. Exemplarily, the corresponding relation between the real-time temperature of battery core of the battery during the charging process and the temperature calibration factor c can be stored in BMS in advance. Based on the corresponding relation, the temperature calibration factor of the lithium battery core at the current charging temperature can be obtained. Table 1A below shows the corresponding relation between the core temperature and the temperature calibration factor.

Table 1A

| Temperature of battery core (°C) | Battery core temperature calibration factor c |
|---|---|
| -10 | 1.3 |
| 0 | 1.28 |
| 10 | 1.15 |
| 20 | 1.13 |
| 25 | 1.1 |
| 30 | 1 |
| 40 | 0.95 |

(continued)

| Temperature of battery core (°C) | Battery core temperature calibration factor c |
|---|---|
| 45 | 0.92 |

The internal resistance growth rate K is the growth rate of the collected real-time DC internal resistance of the lithium battery relative to its factory default DC internal resistance (also called "DC internal resistance in the initial state"). For example, the factory default DC internal resistance of the lithium battery is designated as $R_b$, and the real-time internal resistance collected at a certain charging time point is designated as $R_c$, then the internal resistance growth rate K is $(R_c-R_b)/R_b$. Similarly, the corresponding relation between the internal resistance growth rate K and the internal resistance calibration factor b can be pre-stored in a mobile terminal. Exemplarily, Table 1B below shows the corresponding relation between the internal resistance growth rate and the internal resistance calibration factor.

Table 1B

| Internal resistance growth rate K | Internal resistance calibration factor a |
|---|---|
| ≤0% | 1.15 |
| 5% | 1 |
| 10% | 0.9 |
| 20% | 0.8 |
| 30% | 0.7 |
| 50% | 0.5 |
| 80% | 0.2 |
| 120% | 0.1 |
| >120% | 0.05 |

Similarly, the corresponding relation between the differential of the amount of electricity ((dQ/dV)/CA) per unit capacity and the calibration factor b can be pre-stored in BMS. Exemplarily, Table 1C below shows the corresponding between (dQ/dV)/CA and the calibration factor b.

Table 1C

| Differential of amount of electricity ((dQ/dV)/CA) per unit capacity | Calibration factor b for dQ/dV |
|---|---|
| 23.6 | -0.012 |
| 16.2 | -0.016 |
| 14.4 | -0.02 |
| 13 | -0.023 |
| 7.9 | -0.035 |
| 6.5 | -0.042 |
| 5.4 | -0.05 |
| 4.7 | -0.068 |

The charging method for the lithium battery includes: when the charging voltage of the lithium battery reaches $V_s$, if the lithium battery is required to show a high energy density characteristic, further charging the lithium battery to $V_h$; and if the lithium battery is not required to show a high energy density characteristic (that is, to maintain a long cycle life characteristic), stopping charging the lithium battery.

Whether the lithium battery is required to show a high energy density characteristic may be issued remotely by a user during the charging process, or set by the mode selection before charging. This will be explained in detail in the description of powered vehicle.

In a fourth aspect, an embodiment of the present disclosure further provides a powered vehicle 300, having a battery system including at least one first battery unit. The first battery unit includes multiple lithium batteries according to the first aspect of the present disclosure. The battery system of the powered vehicle can communicate with a vehicle driving unit 301. Exemplarily, the powered vehicle 300 can be a pure electric vehicle, or a hybrid electric vehicle. The vehicle driving unit 301 may be an electric motor.

In some embodiments, as shown in FIG. 3, the battery system of the powered vehicle 300 only includes the first battery unit 1. The first battery unit 1 can be a "non-modular" battery pack, or a "modular" battery pack. When the first battery unit 1 is a "modular" battery pack, multiple lithium batteries 100 can be connected in series, in parallel or in a hybrid mode to form a modular battery pack. As shown in FIG. 3, the first battery unit 1 includes multiple lithium batteries 100 and a first charge control device 110. The first charge control device 110 is configured to monitor the state information of each lithium battery, such as voltage, current, internal resistance, and temperature etc., and controlling the charging of each lithium battery 100. The first charge control device 110 can be specifically the battery management system (BMS) of the first battery unit 1 or a separate module, which is electrically connected to the BMS of the second battery unit (at this time, both can be connected via CAN bus).

When the battery system of the powered vehicle 300 only includes the first battery unit 1, the lithium battery is controlled to be fully charged or charged to a lower SOC during the charging process according to the actual range requirement of the powered vehicle, so as to meet the long range requirement when needed, and meet the long cycle life when a short range is required.

Particularly, the first charge control device 110 is configured to, when the powered vehicle runs in a first mode, control the charging cut-off voltage to which the lithium battery is charged to $V_s$; and the first charge control device is further configured to, when the powered vehicle runs in a second mode, control the charging cut-off voltage to which the lithium battery is charged to $V_h$, where $V_s < V_h$. At $V_s$, no elemental lithium is precipitated on the negative electrode of the lithium battery, and the lithium battery shows a long cycle life performance. $V_h$ is an upper charging voltage limit that the lithium battery can tolerate. In the first mode, the range provided by the first battery unit for the powered vehicle is less than the range provided by the first battery unit for the powered vehicle in the second mode. Here, the first mode is called a short range mode, and the second mode is called a long range mode.

The first mode is a mode used frequently by the powered vehicle, for example, in the daily commuting in short and medium distances. The second mode is a mode used less frequently, and usually used when driving a long distance on vacation. When the powered vehicle needs to run in the short range mode, the first battery unit 1 is controlled such that the lithium battery is not charged to the upper charging voltage, but to a low SOC during the charging process of the powered vehicle, to ensure that no elemental lithium is precipitated on the negative electrode of the battery. This facilitates the lithium battery of the first battery unit to exert the characteristic of long cycle life. When the powered vehicle needs to run in the long range mode, the lithium battery is fully charged, to ensure that the first battery unit exerts the characteristic of high energy density. As such, although the cycle life of the lithium battery in the "long range mode" is not as long as that in the "short range mode", due to the less frequently use of the "long range mode", the arrangement of the protective layer suppresses the side reaction of the electrolyte solution of the lithium battery 100 in the state of high energy density, and reduces the risk of precipitated lithium piercing the separator, so that the first battery unit of the powered vehicle can have more low-SOC cycles and more full-charge cycles as a whole, and provide a long range for the vehicle when needed.

Exemplarily, the range of the powered vehicle in the first mode may be 400-800 km, and the range of the powered vehicle in the second mode may be 800-1200 km. Moreover, the first mode is also called "daily mode", which is the most commonly used mode by the powered vehicle. The second mode is called "holiday mode", which is an occasionally used mode by the powered vehicle.

During the process of charging the lithium battery, if the first charge control device 110 does not receive an instruction to enable the second running mode by the powered vehicle 300, the charging cut-off voltage for charging the lithium battery100 is acquiesced to be $V_s$. During the lithium battery 100 is charged or before the lithium battery100 is charged, if the first charge control device 110 receives an instruction to enable the second running mode by the powered vehicle 300, the charging cut-off voltage for charging the lithium battery is controlled to be $V_h$.

The "instruction to enable the second running mode by the powered vehicle" can be set by the mode selection before charging, or issued remotely during the charging process. Particularly, this instruction can be issued by a user of the powered vehicle by pressing a mode button on a vehicle operation panel, or by remotely manipulating an intelligent terminal that can communicate with the vehicle (for example, when the charging voltage of the lithium battery is close to $V_s$, information such as "whether to activate the long range mode" is pushed to the user through an intelligent network connection system of the vehicle).

In some embodiments of the present disclosure, if the charging cut-off voltage when the lithium battery is charged for an i-th time is $V_h$, the charging cut-off voltage when the lithium battery is charged for an i+1 time is adjusted to $V_s$. $V_s$ meets the following formula:

$$V_s = cV_b + a \times c \times K + b \times c \times (dQ/dV)/(3.6 \times CA),$$

where CA is the nominal capacity of the lithium battery when discharged at 0.33C, $V_b$ is a reference voltage at which no elemental lithium is precipitated on the negative electrode of the lithium battery with a real-time charging capacity, K is the internal resistance growth rate of the real-time DC internal resistance of the lithium battery during an i+1 charging process relative to its factory default DC internal resistance, dQ/dV is the real-time differential value of the charged amount of electricity to the charging voltage of the lithium battery during the i+1 charging process, c is the calibration factor of the real-time temperature of battery core of the lithium battery during the i+1 charging process, a is the calibration factor of K, and b is the calibration factor of (dQ/dV)/CA.

As mentioned earlier in the present disclosure, in this case, $V_s$ is adjusted mainly to reduce the difference between $V_s$ and $V_h$, so as to ensure that the range is as long as possible while the lithium battery has a long service life.

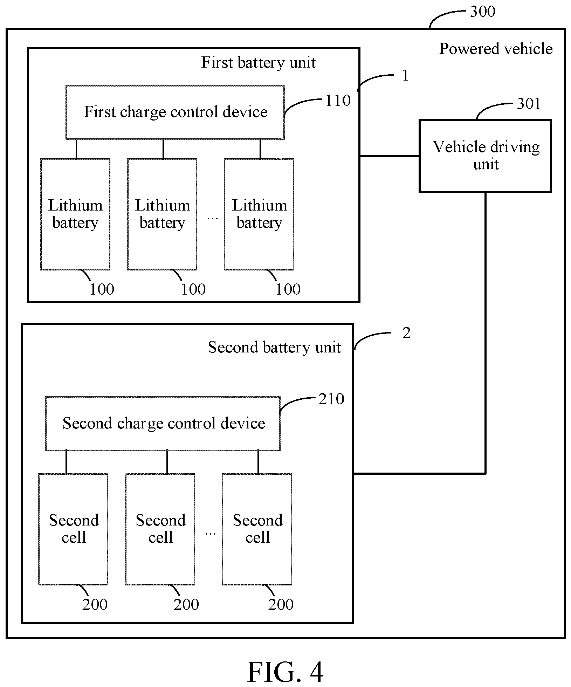

In some other embodiments, as shown in FIG. 4 the battery system of the powered vehicle 300 also includes at least one second battery unit 2. The second battery unit 2 includes multiple second cells 200, and the negative electrode active material of the second cell 200 includes graphite and/or a silicon-based material. The silicon-based material includes at least one of elemental silicon, a silicon oxide, a silicon-based alloy and a silicon-carbon composite material. The second cell 200 is a conventional lithium battery, in which other materials than metal lithium (elemental lithium and/or lithium-silicon alloy) is used as the negative electrode active material, and the energy density is lower than that of the lithium battery 100 provided in the first aspect of the present disclosure.

Similar to the first battery unit 1 above, the second battery unit 2 can be a "non-modular" battery pack, or a "modular" battery pack. In addition to the multiple second cells 200, the second battery unit may further include a second charging control device 210 for monitoring the charging of the second cells 200. Similarly, the second charging control device 210 can be specifically the BMS of the second battery unit 2, or a separate module electrically connected to the BMS of the second battery unit. Definitely, the second charging control device 210 can also be integrated with the first charge control device 110 in the same controller.

In some embodiments of the present disclosure, when the powered vehicle 300 runs in the first mode, the powered vehicle 300 is powered only by the second battery unit 2. When the powered vehicle 300 runs in the second mode, the powered vehicle 300 is powered by both the first battery unit 1 and the second battery unit 2, or the powered vehicle 300 is powered only by the first battery unit 1. The range of the powered vehicle in the first mode is smaller than the range in the second mode.

Optionally, the first charge control device110 is configured to, before or during the charging of the lithium battery 100 in the first battery unit 1, when the powered vehicle is known to run in the second mode, control the charging cut-off voltage to which the lithium battery100 in the first battery unit 1 is charged to $V_h$. That is, the lithium battery 100 can be fully charged. Definitely, the first charge control device110 is further configured to, before or during the charging of the lithium battery 100 in the first battery unit 1, when the powered vehicle is known to run in the second mode, and the powered vehicle 300 is powered by both the first battery unit 1 and the second battery unit 2 in the second mode, control the charging cut-off voltage to which the lithium battery 100 in the first battery unit 1 is charged to $V_s$. However, in this case, the range of the vehicle in the second mode is less than the range provided by the second battery unit 2 and the first battery unit 1 charged to $V_h$.

When the powered vehicle 300 does not require a particularly long range (for example, in commuting using the vehicle), only the second battery unit 2 with low energy density can be used to power the vehicle. Therefore, the vehicle can withstand more charging and discharging cycles, and have a long service life. When the vehicle requires a long range (such as in long-distance travel using the vehicle on vacation) occasionally, the vehicle can be powered by both the first battery unit 1 and the second battery unit 2 or only by the first battery unit 1. In this way, the vehicle gets more power, and the purpose of long battery life can be selectively achieved without compromising the overall cycle life. Therefore, the powered vehicle can selectively use different battery units of the battery system according to different ranges, such that the less frequently used battery unit with high energy density in the powered vehicle shows a long cycle life, and the overall battery system has long service life and long range.

The embodiments of the present disclosure will be further described in several examples below.

Embodiment 1

(1) Fabrication of positive electrode plate

960 g of the positive electrode active material ternary NCM 622, 30 g of the binder PVDF, 5 g of the conductive agent acetylene black, and 5 g of the conductive agent carbon fibers were added to 2000 g of the solvent N-methyl pyrrolidone (NMP), and stirred in a vacuum mixer, to form a stable and uniform positive electrode slurry.

The positive electrode slurry was evenly and intermittently coated by a slit coater on two sides of an aluminum foil (the aluminum foil having a width of 160 mm, and a thickness of 16 μm), then dried at a temperature of 393 K, and pressed by a roller, to form a positive electrode material layer with a thickness of 135 μm on the aluminum foil. Thus, the positive electrode plate was obtained. Then the positive electrode plate was cut into a rectangular electrode plate with a size of 48 mm*56 mm, and a tab was spot welded at a position in the width direction.

(2) Preparation of electrolyte solution

In a glove box filled with argon (with a $H_2O$ content of ≤5 ppm and an $O_2$ content of ≤ 5 ppm), ethylene glycol dimethyl ether (DME), 1,1,2,2-tetrafluoroethyl-2,2,3,3-tetrafluoropropyl ether (TTE), and difluoroethyl acetate (DFEA) were mixed at a volume ratio of DME:TTE:DFEA = 30:50:20. 60 wt% lithium bis(fluorosulfonyl)imide $LiN(SO_2F)_2$ was added to the mixed solution, to obtain an electrolyte solution.

(3) Fabrication of negative electrode plate

a. 1000 g of a silicon monoxide powder was added to 2000 g of water, and then 50 g of the binder polyacrylic acid (PAA) and 20 g of the conductive agent acetylene black were added, and stirred vigorously until a uniform and stable negative electrode slurry was formed. The negative electrode slurry was evenly and intermittently coated by a slit coater on two sides of a copper foil (having a width of 160 mm, and a thickness of 8 μm), then dried at a temperature of 393 K, and pressed by a roller, to form a silicon monoxide negative electrode material layer with a thickness of 60 μm on the copper foil. Thus, the negative electrode plate SA1 was obtained.

b. 200 g of PEO having a molecular weight of 600,000 was added to 2000 g of acetonitrile, and then 16 g of a nano alumina powder and 10 g of an anhydrous lithium nitrate powder were added, and stirred vigorously until a uniform and stable protective layer slurry was formed. The protective layer slurry was evenly and intermittently coated on the negative electrode plate SA1, to obtain the negative electrode plate SA2.

c. In a glove box (with a $H_2O$ content of ≤5 ppm and an $O_2$ content of ≤ 5 ppm), The negative electrode plate SA2 was attached to a lithium film (having a thickness of 15 μm) covered on a PET release film, to contact the protective layer with the lithium film. Under the action of a hot press, the lithium element in the lithium film were totally transferred to the negative electrode plate SA2, to obtain the negative electrode plate SA3. The negative electrode material layer on the negative electrode plate SA3 is 78 μm thick, and the lithium-silicon negative electrode active material includes a lithium-silicon alloy and $Li_2O$. The negative electrode plate SA3 was cut into a rectangular electrode plate with a size of 49mm*57mm, and a tab was spot welded at a position in the width direction. In this way, a negative electrode used to assemble a battery was obtained.

(4) Assembly of battery

The positive electrode plate obtained in Step (1), the negative electrode plate obtained in Step (3) and a separator were stacked, to obtain a bare cell, where the positive and negative electrode plates are spaced apart by the separator. The bare cell was placed in an aluminum-plastic film outer packaging body, the electrolyte solution prepared in Step (2) was injected, evacuated, sealed, left at 60°C for 48 hrs, and subjected to formation under pressure at 60°C, followed by secondary packaging, exhaust, and capacity grading, to obtain the lithium battery of Embodiment 1 of the present disclosure.

When the lithium battery in Embodiment 1 is in the state of fully charged, the lithium-silicon composite negative electrode active material includes elemental lithium and a lithium-silicon alloy $Li_{4.4}Si$. In the lithium-silicon composite negative electrode active material, elemental lithium accounts for 23% by mole, and the lithium-silicon alloy $Li_{4.4}Si$ accounts for 71% by mole.

The lithium battery according to Embodiment 1 of present disclosure was subjected to charging and discharging cycle test as follows.

The lithium battery according to Embodiment 1 was subjected to charging and discharging cycle test on LAND CT 2001C secondary battery performance test instrument at 25±1°C. The steps of the first common low-SOC cycle test were as follows: The battery was left for 10 min; charged to a charging cut-off voltage of 3.95 V at a constant current of 0.2C and then to 0.05C at a constant voltage; left for 10 min; and then discharged to 3.0 V at a constant current. This was 1 round of common low-SOC cycle. This step was repeated, to perform 30 rounds of common low-SOC cycles. The steps of high-energy cycle test were as follows: The battery was left for 10 min; charged to a voltage of 4.25V at a constant current of 0.2C and then to 0.05C at a constant voltage; left for 10 min; and then discharged to 3.0 V at a constant current. This was 1 round of high-energy cycle. One round of high-energy cycle was performed every 30 rounds of common cycles. After each high-energy cycle, the charging cut-off voltage of the next common low-SOC cycle was calibrated using the formula $V_s = cV_b + a \times c \times K + b \times c \times (dQ/dV)/(3.6 \times CA)$.

When the discharge capacity of the battery during cycle process is less than 80% of the first discharge capacity, the cycle process was terminated. The number n of cycles was the cycle life of the lithium battery. The capacity retention rate at the number n of cycles was recorded, and the ratio of the energy density of the battery at the number n of cycles to the first energy density was taken as the energy retention rate of the lithium battery.

Embodiment 2

A lithium battery was fabricated, which was different from the battery in Embodiment 1 in that in Step (3), 800 g of silicon powder was used in place of the silicon monoxide powder, and the thickness of the lithium film covered on a PET release film was 12 $\mu$m.

When the lithium battery in Embodiment 2 is in the state of fully charged, in the lithium-silicon composite negative electrode active material, elemental lithium accounts for 24% by mole, and the lithium-silicon alloy $Li_{4.4}Si$ accounts for 76% by mole.

The lithium battery in Embodiment 2 was charged according to the charging and discharging process provided in Embodiment 1.

Embodiment 3

A lithium battery was fabricated, which was different from the battery in Embodiment 1 in that in Step (3), 800 g of silicon powder was used in place of the silicon monoxide powder, and the thickness of the lithium film covered on a PET release film was 10 $\mu$m.

When the lithium battery in Embodiment 3 is in the state of fully charged, in the lithium-silicon composite negative electrode active material, elemental lithium accounts for 18% by mole, and the lithium-silicon alloy $Li_{4.4}Si$ accounts for 82% by mole.

The lithium battery in Embodiment 3 was charged according to the charging and discharging process provided in Embodiment 1.

Embodiment 4

A lithium battery was fabricated, which has the same structure as the battery in Embodiment 3, except that the step of "charging the battery to a charging cut-off voltage of 3.95 V at a constant current of 0.2C" in Embodiment 3 was modified such that the charging cut-off voltage was 4.0 V

To highlight the beneficial effects of the embodiments of the present disclosure, the following comparative embodiments were provided.

Comparative Embodiment 1

A lithium battery was fabricated, which was different from the battery in Embodiment 1 in that in Step (3), the fabricated negative electrode plate SA1 was directly used as the negative electrode plates DS1 for assembling the lithium battery of Comparative Embodiment 1. The negative electrode in Embodiment 1 had no metal lithium. In Step (2), the solvent in the electrolyte solution was an ester solvent, and specifically a mixture of ethylene carbonate (EC) and diethyl carbonate (DEC) at a volume ratio of 4:6.

The charging-discharging cycle test method of the lithium battery prepared in Comparative Embodiment 1 was as follows: 5 lithium batteries were subjected to charging and discharging cycle test at 0.2 C on LAND CT 2001C secondary battery performance test instrument at 25±1°C. The steps were as follows. The battery was left for 10 min; charged to a charging cut-off voltage of 4.2V at a constant current of 0.2C and then to a cut-off current of 0.05C at a constant voltage of 4.2V; left for 10 min; and then discharged to 3.0 V at a constant current. This was 1 round of charging and discharging cycle.

The charging and discharging steps was repeated. When the discharge capacity of the battery during cycle process is less than 80% of the first discharge capacity, the cycle process was terminated. The number n of cycles was the cycle life of the lithium battery. The capacity retention rate at the number n of cycles was recorded, and the ratio of the energy density of the battery at the number n of cycles to the first energy density was taken as the energy retention rate of the lithium battery.

Comparative Embodiment 2

A lithium battery was prepared, which was different from the battery in Embodiment 1 in that in Step (3), no protective layer was formed on the negative electrode plate SA1, and the negative electrode plateSA1 was hot pressed to the lithium film covered on a PET release film. The obtained negative electrode plate DS2 was assembled to obtain the lithium battery of Comparative Embodiment 2.

To provide powerful support for the effect brought about by the technical solutions in the embodiments of the present disclosure, the energy density (battery volume and discharge energy) and cycle life of the battery were tested. The test results are shown in Table 2.

Table 2. Test data of energy density and cycle life of each group of samples

|  | Embodiment 1 | Embodiment 2 | Embodiment 3 | Embodiment 4 | Comparative Embodiment 1 | Comparative Embodiment 2 |
|---|---|---|---|---|---|---|
| Energy density (Wh/L) | 872 | 895 | 910 | 910 | 636 | 872 |
| Cycle number, n | 1250 | 1128 | 984 | 847 | 153 | 181 |

As can be seen from Table 2, the lithium battery provided in the embodiment of the present disclosure has both high energy density and long cycle life.

The foregoing embodiments show only several implementations of the present disclosure and are described in detail, which, however, are not to be construed as a limitation to the scope of the present disclosure. It should be noted that for a person of ordinary skill in the art, several variations and improvements can be made without departing from the idea of the present disclosure, which are all contemplated in the protection scope of the present disclosure. Therefore, the protection scope of the present disclosure shall be defined by the appended claims.

**Claims**

1. A lithium battery, comprising a positive electrode plate, a negative electrode plate, a separator located between the positive electrode plate and the negative electrode plate, and an electrolyte solution, a negative electrode material layer of the negative electrode plate comprising a lithium-silicon composite negative electrode active material, and the negative electrode material layer having a protective layer on the surface or the lithium-silicon composite negative electrode active material having a protective layer on the surface, wherein the protective layer comprises a polymer matrix and a lithium salt; and
when the lithium battery is fully charged, the lithium-silicon composite negative electrode active material comprises elemental lithium and a lithium-silicon alloy $Li_{4.4}Si$, and the elemental lithium accounts for 15%-95% by mole of the lithium-silicon composite negative electrode active material.

2. The lithium battery according to claim 1, wherein when the lithium battery is fully charged, the lithium-silicon alloy $Li_{4.4}Si$ accounts for 5%-85% by mole of the lithium-silicon composite negative electrode active material.

3. The lithium battery according to claim 1 or 2, wherein the polymer matrix comprises one or more of polyethylene oxide, polysiloxane, polyvinylidene fluoride, polymethyl methacrylate, polyacrylonitrile, and a derivative and copolymer thereof; the lithium salt comprises one or more of lithium nitrate, lithium sulfide, lithium chloride, lithium bromide, lithium iodide, lithium fluoride, and lithium phosphate.

4. The lithium battery according to any one of claims 1 to 3, wherein the N/P ratio of the lithium battery is less than 1.

5. The lithium battery according to any one of claims 1 to 4, wherein the solvent in the electrolyte solution comprises an ether solvent, and the ether solvent comprises at least one of an non-halogenated ether solvent and a fluoroether solvent.

6. The lithium battery according to any one of claims 1 to 5, wherein when the SOC to which the positive electrode of the battery is charged is lower than a first threshold, the lithium-silicon composite negative electrode active material comprises no elemental lithium, wherein the first threshold is 15%-95%.

7. A method for preparing a lithium battery, comprising the following steps:

coating a mixed slurry comprising a silicon-based material, a conductive agent and a binder onto a negative electrode current collector, drying, and rolling, to form a silicon-based material layer on the negative electrode current collector;

hot pressing a lithium film to the silicon-based material layer in a glove box, to allow the lithium element in the lithium film to be completely transferred to the silicon-based material layer, and react with the silicon-based material in situ to form a negative electrode material layer comprising a lithium-silicon composite negative electrode active material, so as to obtain a negative electrode plate,

wherein before the silicon-based material layer and the lithium film are hot pressed, a protective layer is formed on the surface of the silicon-based material layer; or after the negative electrode material layer is formed, a protective layer is formed on the surface of the negative electrode material layer; the protective layer comprises a polymer matrix and a lithium salt; and

assembling the negative electrode plate into a lithium battery, wherein when the lithium battery is fully charged, the lithium-silicon composite negative electrode active material comprises elemental lithium and a lithium-silicon alloy $Li_{4.4}Si$, and the elemental lithium accounts for 15%-95% by mole of the lithium-silicon composite negative electrode active material.

8. The preparation method according to claim 7, wherein the silicon-based material comprises at least one of elemental silicon, a silicon oxide, a silicon-based non-lithium alloy, and other silicon compounds.

9. A charging method for a lithium battery according to any one of claims 1 to 6, comprising the following steps:

when the lithium battery is required to show a long cycle life performance, controlling the charging cut-off voltage $V_s$ of the lithium battery when charged to meet the formula:

$$V_s = cV_b + a{\times}c{\times}K + b{\times}c{\times}(dQ/dV)/(3.6{\times}CA),$$

wherein while the lithium battery shows a long cycle life performance, no elemental lithium is precipitated on the negative electrode of the lithium battery at $V_s$, and $V_s < V_h$; and

wherein in the formula, $V_h$ is an upper charging voltage limit that the lithium battery can tolerate, CA is the nominal capacity of the lithium battery when discharged at 0.33C, $V_b$ is a reference voltage at which no elemental lithium is precipitated on the negative electrode of the lithium battery with a real-time charging capacity, K is the internal resistance growth rate of the real-time DC internal resistance of the lithium battery during the charging process relative to its factory default DC internal resistance, dQ/dV is the real-time differential value of the charged amount of electricity to the charging voltage of the lithium battery, c is the calibration factor of the real-time temperature of a battery core of the lithium battery during the charging process, a is the calibration factor of K, and b is the calibration factor of (dQ/dV)/CA.

10. The charging method for a lithium battery according to claim 9, wherein when the charging voltage of the lithium battery reaches $V_s$, if the lithium battery is required to show a high energy density characteristic, the lithium battery is further charged to $V_h$; and if the lithium battery is not required to show a high energy density characteristic, the charging of the lithium battery is stopped, wherein when the lithium battery shows high energy density characteristic, the lithium-silicon composite negative electrode active material comprises elemental lithium, and the charging cut-off voltage of the lithium battery is greater than $V_s$.

11. A powered vehicle, a battery system of the powered vehicle comprising at least one first battery unit, the first battery unit comprising a plurality of lithium batteries according to any one of claims 1 to 6 and a first charge control device.

12. The powered vehicle according to claim 11, wherein the first charge control device is configured to control the charging cut-off voltage to which the lithium battery is charged to $V_s$ before or during the charging of the lithium battery in the first battery unit when the powered vehicle is known to run in a first mode; and

the first charge control device is further configured to, control the charging cut-off voltage to which the lithium battery is charged to $V_h$ before or during the charging of the lithium battery in the first battery unit when the powered vehicle is known to run in a second mode, wherein $V_h$ is an upper charging voltage limit that the lithium battery can tolerate, and $V_s < V_h$; just at $V_s$, no elemental lithium is precipitated on the negative electrode of the lithium battery; and

wherein the range of the powered vehicle in the first mode is smaller than the range in the second mode.

13. The powered vehicle according to claim 12, wherein $V_s$ meets the following formula:

$$V_s = cV_b + a \times c \times K + b \times c \times (dQ/dV)/(3.6 \times CA),$$

where CA is the nominal capacity of the lithium battery when discharged at 0.33C, $V_b$ is a reference voltage at which no elemental lithium is precipitated on the negative electrode of the lithium battery with a real-time charging capacity, K is the internal resistance growth rate of the real-time DC internal resistance of the lithium battery during the charging process relative to its factory default DC internal resistance, dQ/dV is the real-time differential value of the charged amount of electricity to the charging voltage of the lithium battery, c is the calibration factor of the real-time temperature of battery core of the lithium battery during the charging process, a is the calibration factor of K, and b is the calibration factor of (dQ/dV)/CA.

14. The powered vehicle according to claim 11, further comprising at least one second battery unit, wherein the second battery unit comprises a plurality of second cells, a negative electrode active material of the second cells comprising graphite and/or a silicon-based material.

15. The powered vehicle according to claim 14, wherein when the powered vehicle runs in the first mode, the powered vehicle is powered only by the second battery unit; and when the powered vehicle runs in the second mode, the powered vehicle is powered by both the first battery unit and the second battery unit, or the powered vehicle is powered only by the first battery unit,
wherein the range of the powered vehicle in the first mode is smaller than the range in the second mode.

16. The powered vehicle according to claim 15, wherein when the first charge control device gets to know that the powered vehicle will run in the second mode, and the powered vehicle will be powered only by the first battery unit before or during the charging of the first battery unit, the first charge control device controls the charging cut-off voltage to which each of the plurality of lithium batteries in the first battery unit are charged to $V_h$, wherein $V_h$ is the eupper charging voltage limit that the lithium battery can tolerate.

17. The powered vehicle according to claim 15, wherein when the first charge control device gets to know that the powered vehicle will run in the second mode, and the powered vehicle is powered by both the first battery unit and the second battery unit before or during the charging of the first battery unit, the first charge control device controls the charging cut-off voltage to which each of the plurality of lithium batteries in the first battery unit are charged to $V_s$ or $V_h$,

wherein $V_h$ is the upper charging voltage limit that the lithium battery can tolerate; at $V_s$, no elemental lithium is precipitated on the negative electrode of the lithium battery, and $V_s < V_h$; and $V_s$ meets the formula:

$$V_s = cV_b + a \times c \times K + b \times c \times (dQ/dV)/(3.6 \times CA),$$

wherein CAis the nominal capacity of the lithium battery when discharged at 0.33C, $V_b$ is a reference voltage at which no elemental lithium is precipitated on the negative electrode of the lithium battery with a real-time charging capacity, K is the internal resistance growth rate of the real-time DC internal resistance of the lithium battery during the charging process relative to its factory default DC internal resistance, dQ/dV is the real-time differential value of the charged amount of electricity to the charging voltage of the lithium battery, c is the calibration factor of the real-time temperature of battery core of the lithium battery during the charging process, a is the calibration factor of K, and b is the calibration factor of (dQ/dV)/CA.

~100

FIG. 1

FIG. 2

FIG. 3

FIG. 4

## INTERNATIONAL SEARCH REPORT

| | International application No. |
|---|---|
| | **PCT/CN2022/095952** |

**A. CLASSIFICATION OF SUBJECT MATTER**

H01M 4/134(2010.01)i; H01M 10/052(2010.01)i; H01M 10/44(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI, WEB OF SCIENCE: 负极, 阳极, 锂, 硅, 金属, 合金, 保护层, 锂盐, 充电, negative electrode, anode, Li, lithium, Si, silicon, metal, alloy, protective layer, lithium salt, charge

**C. DOCUMENTS CONSIDERED TO BE RELEVANT**

| Category* | Citation of document, with indication, where appropriate, of the relevant passages | Relevant to claim No. |
|---|---|---|
| Y | CN 112397686 A (MICROVAST POWER SYSTEMS CO., LTD. et al.) 23 February 2021 (2021-02-23) description, paragraphs 2 and 32-110 | 1-8, 11-12, 14-16 |
| Y | CN 109411694 A (TIANQI LITHIUM (JIANGSU) CO., LTD.) 01 March 2019 (2019-03-01) description, paragraphs 7-61, and figure 1 | 1-8, 11-12, 14-16 |
| Y | US 2019115617 A1 (NANOTEK INSTRUMENTS, INC.) 18 April 2019 (2019-04-18) description, paragraphs 60-78 | 1-8, 11-12, 14-16 |
| Y | JP 2007080619 A (SONY CORP.) 29 March 2007 (2007-03-29) description, paragraphs 11-50 | 1-8, 11-12, 14-16 |
| Y | JP 2020095931 A (TDK CORP.) 18 June 2020 (2020-06-18) description, paragraphs [0011]-[0081] | 1-8, 11-12, 14-16 |
| Y | US 2017170473 A1 (RAMOT AT TEL-AVIV UNIVERSITY LTD.) 15 June 2017 (2017-06-15) description, paragraphs 73-158 | 1-8, 11-12, 14-16 |
| A | CN 111952545 A (TONGJI UNIVERSITY) 17 November 2020 (2020-11-17) entire document | 1-17 |

☑ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 July 2022** | **08 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/095952**

**C.     DOCUMENTS CONSIDERED TO BE RELEVANT**

| Category* | Citation of document, with indication, where appropriate, of the relevant passages | Relevant to claim No. |
|---|---|---|
| A | JP 2009199761 A (NISSAN MOTOR CO., LTD.) 03 September 2009 (2009-09-03) entire document | 1-17 |

Form PCT/ISA/210 (second sheet) (January 2015)

**INTERNATIONAL SEARCH REPORT**
Information on patent family members

International application No.

**PCT/CN2022/095952**

| Patent document cited in search report | | | Publication date (day/month/year) | Patent family member(s) | | | Publication date (day/month/year) |
|---|---|---|---|---|---|---|---|
| CN | 112397686 | A | 23 February 2021 | None | | | |
| CN | 109411694 | A | 01 March 2019 | None | | | |
| US | 2019115617 | A1 | 18 April 2019 | WO | 2019074753 | A1 | 18 April 2019 |
| | | | | US | 10424810 | B2 | 24 September 2019 |
| JP | 2007080619 | A | 29 March 2007 | None | | | |
| JP | 2020095931 | A | 18 June 2020 | None | | | |
| US | 2017170473 | A1 | 15 June 2017 | WO | 2015114640 | A1 | 06 August 2015 |
| | | | | EP | 3103150 | A1 | 14 December 2016 |
| | | | | EP | 3103150 | B1 | 03 April 2019 |
| | | | | US | 10476076 | B2 | 12 November 2019 |
| CN | 111952545 | A | 17 November 2020 | CN | 111952545 | B | 09 November 2021 |
| JP | 2009199761 | A | 03 September 2009 | JP | 5374885 | B2 | 25 December 2013 |

Form PCT/ISA/210 (patent family annex) (January 2015)

**REFERENCES CITED IN THE DESCRIPTION**

**Patent documents cited in the description**

- CN 202110730852
- CN 201911075192